Europäisches Patentamt

**European Patent Office**

**Office européen des brevets**

(11) Publication number : **0 508 815 A2**

# (12) EUROPEAN PATENT APPLICATION

(21) Application number : **92303231.2**

(22) Date of filing : **10.04.92**

(51) Int. Cl.⁵ : **G01F 15/08**

(30) Priority : **10.04.91 US 683358**

(43) Date of publication of application :
**14.10.92 Bulletin 92/42**

(84) Designated Contracting States :
**DE DK FR GB IT NL**

(71) Applicant : **HALLIBURTON COMPANY**
**P.O. Drawer 1431**
**Duncan Oklahoma 73536 (US)**

(72) Inventor : **Stout, Christopher A.**
**Branchhollow Drive, Apt. 302**
**Carrollton, Texas 75007 (US)**

(74) Representative : **Wain, Christopher Paul et al**
**A.A. THORNTON & CO. Northumberland**
**House 303-306 High Holborn**
**London WC1V 7LE (GB)**

(54) **Well fluid constituent flow rate measurement.**

(57) An apparatus (60) for measuring flow rates of constituents of a well fluid stream flowing through a flow line (62), said apparatus comprising separating means (64) for separating a gas constituent from liquid constituents of the fluid stream, said separating means comprising an inlet for connecting to said flow line ; a gas outlet for said gas constituent of said fluid stream ; and a liquid outlet for said liquid constituents of said fluid stream ; a gas line (66) connected to said gas outlet of said separating means ; a liquid line (68) connected to said liquid outlet of said separating means ; gas flow measuring means (70) for measuring gas flow through said gas line ; and liquid flow measuring means (71,72) for measuring a relative amount of each of said liquid constituents flowing through said liquid line.

FIG. 2

EP 0 508 815 A2

Jouve, 18, rue Saint-Denis, 75001 PARIS

This invention relates to the determination of flow rates of well fluid constituents, and more particularly to a method and apparatus where such determination is made on a three-phase flow without separating the liquid constituents from one another.

After an oil or gas well has been drilled, it is necessary and desirable to determine the flow rates of the various constituents of the well fluid. For example, in a "three-phase" well fluid, these constituents are oil, gas and water.

In previous testing, a fluid stream is flowed from the well through a surface test tree at the wellhead into a processor. This fluid stream is throttled through a choke manifold and is generally flowed into a heater and a three-phase separator in the processor, both sized to accommodate the appropriate flow. The separator separates the fluid into its gas, oil and water constituents. The separated constituents are flowed out of the separator in individual lines. The flow rate of the constituent in each line is measured, so that the operator will know the relative amounts of each. After these measurements are made, the liquid constituents may be recombined into a single line and the gas constituent flared. The single liquid line may be flowed into a test tank in which a total flow rate may be determined for insuring proper calibration of the individual flow meters. The fluid is then pumped to a burner where it is eliminated.

A problem with this prior art method is that it requires costly and relatively heavy equipment, namely the heater, separator, test tank, and all of the associated piping. Additionally, such equipment is fairly large, and the size of it requires a great deal of rig space. Space is at a particular premium on offshore drilling rigs. Transportation of such large equipment is also fairly expensive because of its weight and bulk.

Accordingly, there is a need for a test method and apparatus which eliminates the costly and heavy components of the previously known processor. The present invention addresses these needs by providing a method and apparatus which utilizes a gas/liquid separator rather than the heater, separator and test tank, and further utilizes a mass flow meter for determining the mass and density of the fluid stream and a water cut meter for determining the relative amounts of the liquid constituents, rather than separate oil and water meters.

According to the present invention, there is provided an apparatus for measuring flow rates of constituents of a well fluid stream flowing through a flow line, said apparatus comprising separating means for separating a gas constituent from liquid constituents of the fluid stream, said separating means comprising an inlet for connecting to said flow line; a gas outlet for said gas constituent of said fluid stream; and a liquid outlet for said liquid constituents of said fluid stream; a gas line connected to said gas outlet of said separating means; a liquid line connected to said liquid outlet of said separating means; gas flow measuring means for measuring gas flow through said gas line; and liquid flow measuring means for measuring a relative amount of each of said liquid constituents flowing through said liquid line.

The present invention includes a method and apparatus for determining flow rates of well fluid constituents without separating the liquid constituents from one another. The method comprises the steps of flowing a fluid stream from a wellhead of a well, separating a gas constituent from liquid constituents of the fluid stream, and measuring a relative flow rate of each of the liquid constituents. In the preferred embodiment, the step of separating the gas constituent is accomplished by flowing the fluid stream into a gas/liquid separator, such as a hydrocyclone, wherein the fluid is discharged in a gas stream containing the gas constituent and a liquid stream containing the liquid constituents.

In a typical three-phase well fluid, the liquid constituents comprise oil and water. The step of measuring a relative flow rate of each of the liquid constituents is preferably accomplished by flowing the liquid stream through a mass flow meter, followed by a water cut meter to determine the percentage of the water constituent in the oil constituent.

The method may further comprise the step of measuring the flow rate of the gas constituent. One way of accomplishing this step of measuring the flow rate of the gas constituent is by flowing the gas stream through an orifice-type gas flow meter.

The apparatus of the present invention is used for measuring flow rates of constituents of the well fluid stream flowing through a flow line and comprises separating means for separating the gas constituent from the liquid constituent of the flow stream. The separating means comprises an inlet for connecting to the flow line, a gas outlet for the gas constituent of the fluid stream, and a liquid outlet for the liquid constituents of the fluid stream. The apparatus further comprises a gas line connected to the gas outlet of the separating means, a liquid line connected to the liquid outlet of the separating means, gas flow measuring means for measuring gas flow through the gas line, and liquid flow measuring means for measuring a relative amount of each of the liquid constituents flowing through the liquid line.

Preferably, the separating means is characterized by the gas/liquid separator, the gas flow measuring means is characterized by an orifice-type gas flow meter, and the liquid flow measuring means is characterized by the mass flow meter and water cut meter.

The gas line may be flared, and the apparatus may further comprise a burner downstream from the liquid flow measuring means for burning at least the hydrocarbons of the liquid stream. The liquid line is connected to the burner. A water knock-out may be provided before the burner as necessary.

An important object of the invention is to provide a method and apparatus for determining the flow rate of well fluid constituents without separating the liquid constituents from one another.

Another object of the invention is to provide a method and apparatus for determining the flow rate of well fluid constituents without a heater and three-phase separator by using a gas/liquid separator to separate the gas constituent from the liquid constituents.

In order that the invention may be more fully understood, reference is made to the accompanying drawings, wherein:

FIG. 1 is a schematic view of a prior art apparatus for testing flow rates of well fluid constituents which uses a processor having a heater, three-phase separator and test tank; and

FIG. 2 is a schematic view of the test apparatus of the present invention for determining flow rates of well fluid constituents without separating the liquid constituents from one another.

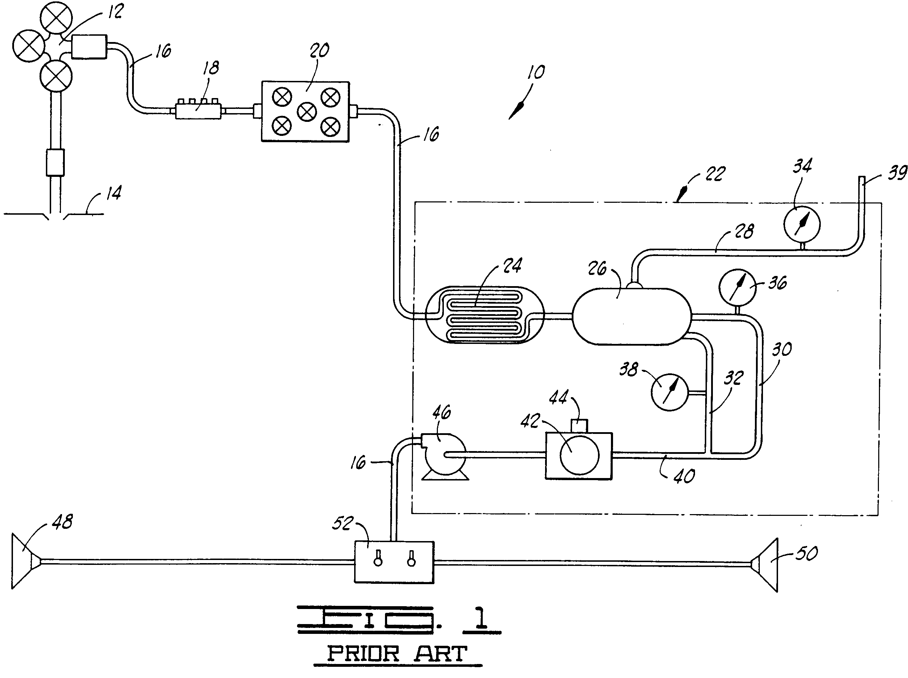

Referring to FIG. 1, a prior art testing apparatus for determining the flow rates of well fluid constituents is shown and generally designated by the numeral 10. Prior art apparatus or system 10 is connected to a surface test tree 12 at a well head 14. A flow line 16 connects prior art apparatus 10 with surface test tree 12. Flow line 16 includes a number of components piped therein.

One such component is a data header 18. This provides a convenient location for the connection of temperature probes and pressure gauges used to monitor the fluid flowing through flow line 16. Ports in the data header may also be used for chemical injection, sand probes and other measurements.

Another component in flow line 16 is a choke manifold 20 which includes one or more valves which are used to accurately throttle the flow from the well so that the fluid pressure downstream from the choke manifold is reduced. The fluid pressure from the well may be too great to be accommodated by the components of apparatus 10 without choke manifold 20.

Downstream from choke manifold 20 is a fluid processor 22. In processor 22, the fluid first flows into a heater 24. Although the heater may not be required under all test conditions, it is frequently required to heat the fluid so that the oil-water emulsion therein is broken. The fluid flows from heater 24 into a large three-phase separator 26 in which the various constituents of the well fluid are separated. The illustrated embodiment is for a system handling a three-phase fluid, and accordingly, has a gas line 28 discharging from the top of separator 26, an oil line 30 discharging from an intermediate portion of the separator, and a water line 32 discharging near the bottom of the separator.

An orifice-type gas flow meter 34 is disposed in gas line 28. A volumetric oil flow meter 36 is disposed in oil line 30, and a volumetric water flow meter 38 is disposed in water line 32.

Downstream from gas flow meter 34, gas line 28 is connected to a flare 39, through which the gas constituent is flared to the atmosphere.

Downstream from meters 36 and 38, oil line 30 and water line 32 may be rejoined in a flow line portion 40 which is part of overall flow line 16. In some prior art testing apparatus, water line 32 is not rejoined with oil line 30, but is instead directed to a tank in which the water may be treated for later disposal. In some cases, the water in this tank is pumped into oil line 16 downstream from fluid processor 22 as necessary. Also, in some cases, oil line 30 is connected directly to burner valve manifold 52.

Flow line 40 is connected to a test tank 42. Test tank 42 may be used to calibrate the total flow through flow meters 34, 36 and 38 by measuring the amount of fluid that enters the tank over a predetermined time. This measurement can be made by such means as a liquid level indicator on test tank 42.

The well fluid is pumped out of fluid processor 22 by a pump 46. The pump fluid is discharged through flow line 16 to a burner apparatus 48 and/or 50. One such burner may be used depending upon its construction. In the illustrated embodiment, two burners 48 and 50 are indicated, and the flow from fluid processor 22 to one or both of the burners is controlled by a burner valve manifold 52.

Operation Of The Prior Art Apparatus

In the operation of prior art apparatus 10, the fluid is flowed to processor 22 as described. The fluid is heated in heater 24 as necessary, and the fluid is separated in separator 26. The individual measurements of the oil, gas and water streams are found by meters 34, 36 and 38, respectively. In this way, the relative proportion of the well constituents is obtained. As indicated, the total flow rate may be checked by measuring the liquid level in test tank 42 over a period of time. This will provide an indication that the total flow rate through meters 34, 36 and 38 is accurate.

The Present Invention

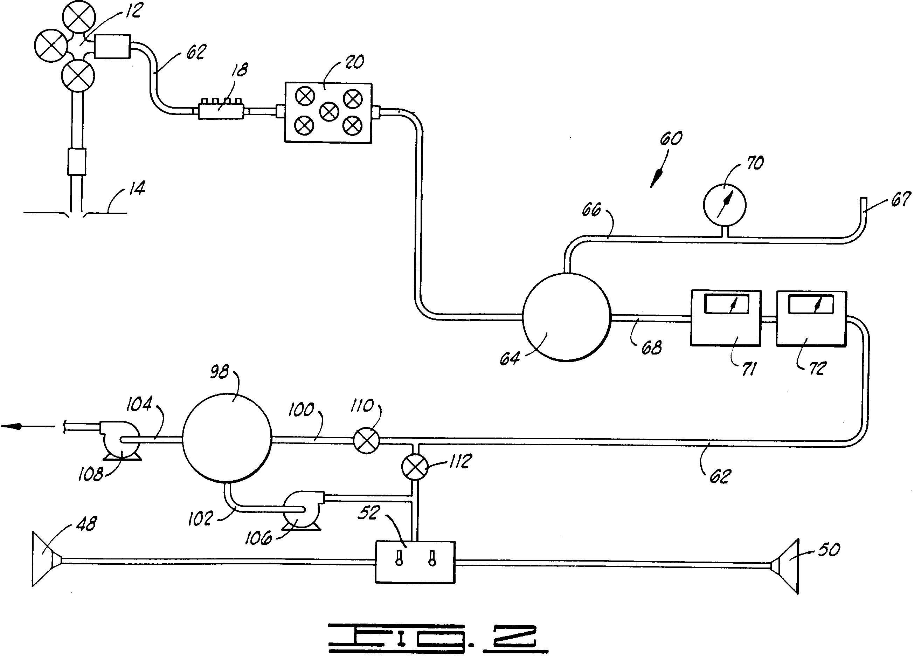

Referring now to FIG. 2, the apparatus of the present invention for determining flow rates of well constituents without separating the liquid constituents thereof from one another is shown and generally designated by the numeral 60. Apparatus or system 60 includes some of the same components in prior art apparatus 10, and those same reference numerals will be used. As in the prior art, apparatus 60 is connected to a surface test tree 12 at a wellhead 14 by a flow line 62. Flow line 62 may include data header 18 and choke manifold 20 which are used in the same manner as previously described.

Fluid discharged from choke manifold 20 enters a gas/liquid separator 64. The specific gas/liquid separator 64 shown in a hydrocyclone, although the invention is not intended to be limited to use of a hydrocyclone. Hydrocyclones themselves are known in the art and are very efficient for gas separation.

The gas is discharged through a gas line 66 which is connected to a flare 67 through which the gas constituent is flared to the atmosphere. The oil and water are discharged together from gas/liquid separator 64 through a liquid line 68.

Gas line 66 may have an orifice-type gas flow meter 70 to determine the amount of gas flowing therethrough. Liquid line 68 has a mass flow meter 71 disposed therein with a water cut meter 72 downstream therefrom. Mass flow meter 71, known in the art, is used to determine the mass and density of the liquid stream flowing through liquid line 68. Water cut meter 72 is of a type generally known in the art and may be used to determine the percent of water in oil by using the difference in dialectric constants between water and oil. One water cut meter is available from Phase Dynamics.

The liquid is then flowed to burner valve manifold 52 to be eliminated by burners 48 and/or 50. Alternatively, liquid line 68 could be directed to an oil tank (not shown).

In wells which may produce a substantial amount of water, it may be necessary to knock out some of the water in the liquid flowing through flow line 62 to burner valve manifold 52. In such cases a water knock-out 98 is connected to line 62 by an inlet line 100. Water knock-out 98 is of a kind known in the art and has an oil outlet line 102 and a water outlet line 104 discharging therefrom. An oil pump 106 is disposed in oil outlet line 102 and may be used to return oil to line 62 and oil burner manifold 52. A water pump 108 may be disposed in water outlet line 104 to pump the separated water to a treatment or disposal location.

Inlet line 100 has a valve 110 therein, and flow line 62 has another valve 112 therein between inlet line 100 and oil outlet line 102. Valves 110 and 112 are used to direct the liquid flow through water knock-out 98 or to bypass it. That is, when valve 110 is open and valve 112 is closed, the liquid will be flowed through water knock-out 98. When valve 110 is closed and valve 112 is open, the liquid will bypass water knock-out 98 and flow directly to oil burner manifold 52.

Operation Of The Present Invention

In the operation of apparatus 60, fluid is flowed to gas/liquid separator 64 as described. The gas flow rate is measured by gas meter 70, and the gas is flared. The percentage of water and oil flowing through liquid line 68 is determined by water cut meter 72. Knowing the total flow of gas, and the relative flow of water and oil, it is a simple matter to calculate the total flow rates of each of the well fluid constituents. Thus, a much simpler apparatus and method is provided for determining the flow rates of well fluid constituents by use of gas/liquid separator 64 and measuring the relative amount of water and oil in the unseparated liquid constituents flowing through liquid line 68.

It will be seen, therefore, that the method and apparatus of determining flow rates of well fluid constituents without separating the liquid constituents thereof from one another are well adapted to carry out the ends and advantages mentioned as well as those inherent therein. While a presently preferred embodiment of the invention has been described for the purposes of this disclosure, numerous changes in the steps of the method and in the arrangement and construction of parts in the apparatus may be made by those skilled in the art. All such changes are encompassed within the scope and spirit of the appended claims.

## Claims

1. An apparatus (60) for measuring flow rates of constituents of a well fluid stream flowing through a flow line (62), said apparatus comprising separating means (64) for separating a gas constituent from liquid constituents of the fluid stream, said separating means comprising an inlet for connecting to said flow line; a gas outlet for said gas constituent of said fluid stream; and a liquid outlet for said liquid constituents of said fluid stream; a gas line (66) connected to said gas outlet of said separating means; a liquid line (68) connected to said liquid outlet of said separating means; gas flow measuring means (70) for measuring gas flow through said gas line; and liquid flow measuring means (71,72) for measuring a relative amount of each of said liquid constituents flowing through said liquid line.

2. Apparatus according to claim 1, wherein said separating means is a hydrocyclone separator.

3. Apparatus according to claim 1 or 2, wherein said gas flow measuring means is an orifice-type flow meter disposed in said gas line.

4. Apparatus according to claim 1,2 or 3, wherein said liquid flow measuring means comprises a water cut meter which determines the percent of water in oil of the liquid constituents.

5. Apparatus according to claim 4, wherein said liquid flow metering means further comprises a mass flow meter upstream from said water cut meter.

6. Apparatus according to claim 1,2,3,4 or 5, further comprising a burner downstream from said liquid flow measuring means.

7. Apparatus according to claim 6, further comprising a water knock-out upstream from said burner.

FIG. 1

PRIOR ART

FIG.2